**Europäisches Patentamt**

**European Patent Office**

**Office européen des brevets**

(19)

(11) Veröffentlichungsnummer: **0 222 244**
**B1**

(12) **EUROPÄISCHE PATENTSCHRIFT**

(45) Veröffentlichungstag der Patentschrift:
**15.02.89**

(51) Int. Cl.⁴: **B65G 15/16**, B65G 15/08

(21) Anmeldenummer: **86114913.6**

(22) Anmeldetag: **27.10.86**

(54) **Gurt-Förderanlage.**

(30) Priorität: **13.11.85 DE 3540160**

(43) Veröffentlichungstag der Anmeldung:
**20.05.87 Patentblatt 87/21**

(45) Bekanntmachung des Hinweises auf die Patenterteilung:
**15.02.89 Patentblatt 89/7**

(84) Benannte Vertragsstaaten:
**AT BE CH DE ES FR GB GR IT LI LU NL SE**

(56) Entgegenhaltungen:
**DE-A- 1 922 636**
**DE-A- 3 345 878**
**DE-C- 948 857**
**US-A- 3 982 626**
**US-A- 4 273 238**

(73) Patentinhaber: **Continental Aktiengesellschaft,
Königsworther Platz 1, D-3000 Hannover 1(DE)**

(72) Erfinder: **Engst, Wilhelm, Dietrichstrasse 9,
D-3008 Garbsen 4(DE)**

ACTORUM AG

**Beschreibung**

Die Erfindung bezieht sich auf eine Gurt-Förderanlage, gemäss dem Oberbegriff des Anspruchs 1. Solche Förderanlagen sind bekannt (siehe z.B. DE-A1 3 345 878).

Die Ausbildung des Fördergurtes als sogenanntes Schlauchband, das durch Überlappen seiner Längsränder zu einem vollständigen Kreisquerschnitt schließbar ist, ermöglicht bei hohen Förderleistungen die Überwindung steilerer Steigungen als die in der Vergangenheit üblichen Flach- oder Muldenfördergurte. Dabei waren in den bisherigen, mit einem solchen Schlauchband ausgerüsteten Förderanlagen diejenigen Anlagenabschnitte problematisch, in denen der Gurt von seiner kreisartig geschlossenen Querschnittsform in die flach ausgebreitete Form geöffnet wurde; denn in diesen Abschnitten war das Fördergut ungeschützt Wind und Regen ausgesetzt. Solche offenen Anlagen-Abschnitte ergeben sich erstens dort, wo der Gurt von einem steil ansteigenden Streckenabschnitt in einen eben verlaufenden oder abfallenden Abschnitt übergeht, sowie zweitens am Ende eines Förderabschnittes, wo der Gurt flach um eine Endumlenkrolle geführt und das Fördergut abgeworfen wird.

Der Erfindung liegt daher die Aufgabe zugrunde, eine Möglichkeit zu schaffen, um auch in diesen beiden Bereichen die Vorteile der geschlossenen Schlauchband-Förderung — also die vollständige Kapselung des Fördergutes — soweit wie irgend möglich erhalten und nutzen zu können.

Diese Aufgabe wird erfindungsgemäß durch eine Schlauchband-Förderanlage gelöst, bei der im Übergangsbereich des Fördergurtes von der Schlauchform zur offen ausgebreiteten Form das Untertrum eines über mindestens drei Umlenkrollen laufenden endlosen Deckbandes in den sich öffnenden Querschnitt des Fördergurtes eintaucht, wobei das Untertrum dieses Deckbandes mit seiner Mittelzone sich unmittelbar auf das Fördergut auflegt und mit seinen Randzonen sich auf den Längskanten des Fördergurtes abstützt.

Zweckmäßig sind beiderseits des Fördergurtes unter einem Schrägwinkel gegen die Waagerechte ausgerichtete Tragrollensätze zum Abstützen der den Fördergurt seitlich überragenden Randbereiche des Deckband-Untertrums angeordnet. Weiterhin ist es vorteilhaft, eine oder mehrere im Mittenbereich des Deckband-Untertrums frei drehbar gelagerte und radial in Richtung nach dem abgedeckten Fördergurt verstellbare Druckrollen vorzusehen.

Mit der erfindungsgemäßen Zuordnung des Deckbandes zu dem Fördergurt wird ein gekapselter Transport des Fördergutes auch dort sichergestellt, wo sich das Schlauchband allmählich öffnet und wo es vollständig offen im abgeflachten oder gemuldeten Zustand verläuft. Die Endpunkte der Deckbandführung werden durch je eine Umlenkrolle bestimmt; dazwischen sind eine oder mehrere Führungsrollen angeordnet, die das Obertrum in ausreichendem Abstand vom Untertrum halten. Es ergibt sich hieraus das charakteristische Anordnungsschema eines nach dem überdeckten Fördergurt hin offenen Winkels, wobei das Untertrum sich zusätzlich gegen die den Fördergurt in seinem abgeflachten Endzustand in den waagerechten Streckenabschnitt führende Umlenkrolle abstützt. Die enge Zuordnung des Deckbandes zu dem Gurt hat zur Folge, daß es sich schon in der Anfangsphase des Öffnungsvorganges unter konvexer Auswölbung in den Schlauchbandquerschnitt hineinzieht und dicht auf das lose Fördergut auflegt. Diese Wirkung wird noch besonders begünstigt, wenn es gemäß einer bevorzugten Ausführungsform der Erfindung ausschließlich in seinen Randbereichen eingebettete, in Längsrichtung durchlaufende Festigkeitsträger enthält. Auf dem Untertrum mitlaufende Druckrollen sichern den unmittelbaren Kontakt unabhängig von allen durch die forschreitenden Querschnittsänderungen des Fördergurtes hervorgerufenen Verlagerungen des Füllgutes. Das Deckband stützt sich dabei beidseitig auf die allmählich auseinanderwandernden hochgebogenen Gurtkanten. Das Füllgut wird also durch das Deckband in jeder Phase der Gurtbewegung zuverlässig abgedeckt, bis es nach dem Passieren der Endumlenkrolle abgeworfen oder – im Falle einer bloßen Steigungsänderung der Förderstrecke – wieder in einen schlauchförmig geschlossenen Streckenabschnitt übergeleitet wird.

Für die Gestaltung der Abwurfstelle bietet die Erfindung den Vorteil einer gezielten und schonenden Lenkung des Massestromes, wenn das Deckband in Berührung mit dem flach-ebenen Fördergurt über einen begrenzten Bogenwinkel um die Endumlenkrolle der Förderanlage und unterhalb dieser um eine in Abwurfrichtung vorgesetzte untere Umlenkrolle geführt ist. Das fallende Fördergut läßt sich auf diese Weise in einem dichten Strom eng zusammenhalten und in seiner Richtung bestimmen. Da das Untertrum des Deckbandes sich dabei praktisch mit der gleichen Abwärtsgeschwindigkeit wie die aufprallenden Fördergutpartikel bewegt, unterliegt es keinem wesentlichen Verschleiß. Um die Verhältnisse an die Besonderheiten verschiedener Fördergüter mit jeweils anderen Abwurfparabeln feinstufig anpassen zu können, ist die untere Umlenkrolle des Deckbandes in einer bevorzugten Ausführungsform der Erfindung in radialer Richtung in einer zur Abgaberichtung parallelen oder im wesentlichen parallelen Ebene verstellbar gelagert.

Die Breite des Deckbandes ist zweckmäßig in einer der Breite des Fördergurtes im flach-ebenen Zustand entsprechenden Größenordnung bemessen. Für sehr hohe Förderleistungen ist es vorteilhaft, das Deckband auf seiner dem Fördergurt zugekehrten Oberfläche mit an seinen Randkanten aufgesetzten durchlaufenden biegsamen Wandelementen zu versehen. Die Wandelemente schließen mit dem in der Endphase des Öffnungsvorganges beidseitig eingefaßten Fördergurt einen wesentlich größeren Raum als im flach aufliegenden Zustand ein, so daß die Mitnahme größerer Fördergutmengen möglich ist. Es empfiehlt sich in diesem Falle auch, die in Längsrichtung durchlaufenden Festigkeitsträger ausschließlich in die aufgesetzten Wandelemente einzubetten.

Die Erfindung ist anhand der schematischen Darstellung von Ausführungsbeispielen in der Zeichnung verdeutlicht. Es zeigen:

Fig. 1 die Abgabestelle einer Förderanlage mit Deckband in Seitenansicht;

Fig. 2 einen Querschnitt nach der Linie II–II in Fig. 1;

Fig. 3 einen Querschnitt nach der Linie III–III in Fig. 1;

Fig. 4 einen Querschnitt nach der Linie IV–IV in Fig. 1;

Fig. 5 die Übergangszone von einer Steilstrecke zu einem waagerechten Streckenabschnitt einer Förderanlage in Seitenansicht und

Fig. 6 einen Querschnitt durch eine Förderanlage ähnlich der Darstellung in Fig. 4 mit einem Deckband anderer Ausführungsform.

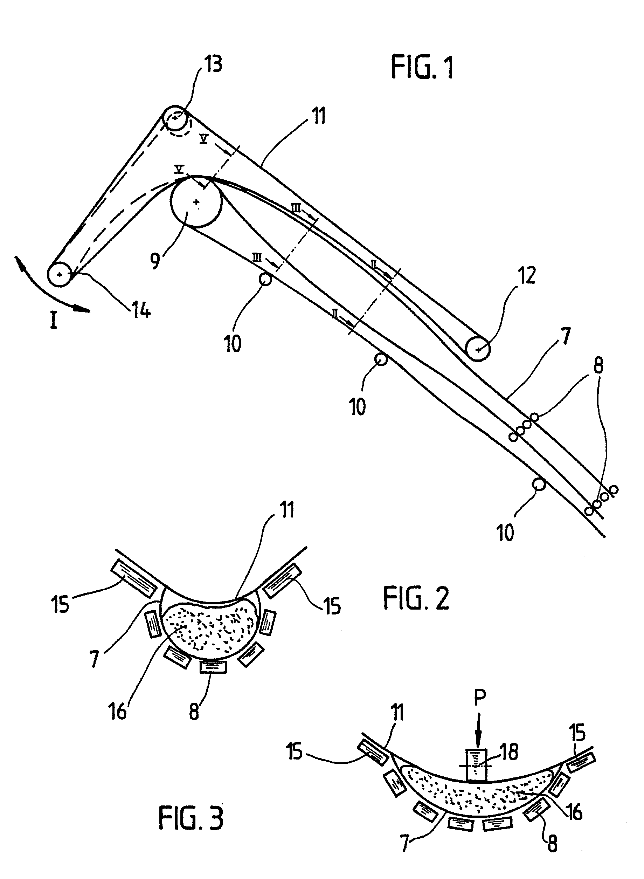

Die in Fig. 1 als Teilausschnitt dargestellte Förderanlage enthält einen Fördergurt 7 aus einem synthetischen Kautschuk mit vorzugsweise nur in seinen Randbereichen eingebetteten in Längsrichtung durchlaufenden Festigkeitsträgern. In Steilstrecken ist der Fördergurt von girlandenartig zusammengefaßten Tragrollensätzen 8 zu einem Schlauchband von etwa Kreisquerschnittsform mit einander überlappenden Rändern geformt und beweglich gestützt, während er zum Abwerfen des Fördergutes über die Endumlenkrolle 9 in einem kontinuierlich ablaufenden Vorgang durch zweckentsprechendes Gruppieren der Tragrollen geöffnet und schließlich mit dem Auflaufen auf die Umlenkrolle 9 geradlinig breitgestreckt wird. Das zurücklaufende Leertrum kann auf üblichen einfach zylindrischen Stützrollen 10 geführt werden.

Oberhalb des Fördergurtes 7 befindet sich ein den Übergangsbereich von seinem vollständig geschlossenen zu seinem vollständig geöffneten Zustand übergreifendes Deckband 11, das endlos über drei Umlenkrollen 12, 13, 14 in dem gezeichneten Verteilungsmuster geführt und dem Fördergurt 7 in der Gestalt eines zu diesem hin offenen Winkels zugeordnet ist. Die bevorzugt als Antriebsrolle dienende in Förderrichtung hintere Deckband-Umlenkrolle 12 ist unmittelbar oder in nur geringem Abstand vor dem mit dem Einsetzen der ersten Öffnungsbewegung markierten Übergangsbereich des Fördergurtes 7 stationär frei drehbar gelagert, während dagegen die vordere Umlenkrolle 14 in größerem Abstand vor der Endumlenkrolle 9 des Fördergurtes und schräg unter dieser angeordnet ist. Die von dem Obertrum des Deckbandes 11 umschlungene obere bzw. mittlere Umlenkrolle 13 ist geringfügig radial verstellbar gelagert, um die Spannung des Deckbandes im Bedarfsfalle nachregeln oder ändern zu können. So hätte beispielsweise ihre Verschiebung in die gestrichelt angedeutete Stellung eine Lockerung mit einer Änderung der Abwurftangente im Sinne des ebenfalls gestrichelten Linienzuges in der Abgabestelle zur Folge. Die Umlenkrolle 14 kann in weiteren Grenzen gemäß dem Doppelpfeil I verstellt werden. Die Notwendigkeit oder Zweckmäßigkeit solcher Änderungen in der Geometrie der Deckbandführung ergibt sich beispielsweise aus einem Wechsel des Fördergutes, der regelmäßig auch Änderungen im Fall- und Aufprallverhalten nach sich zieht.

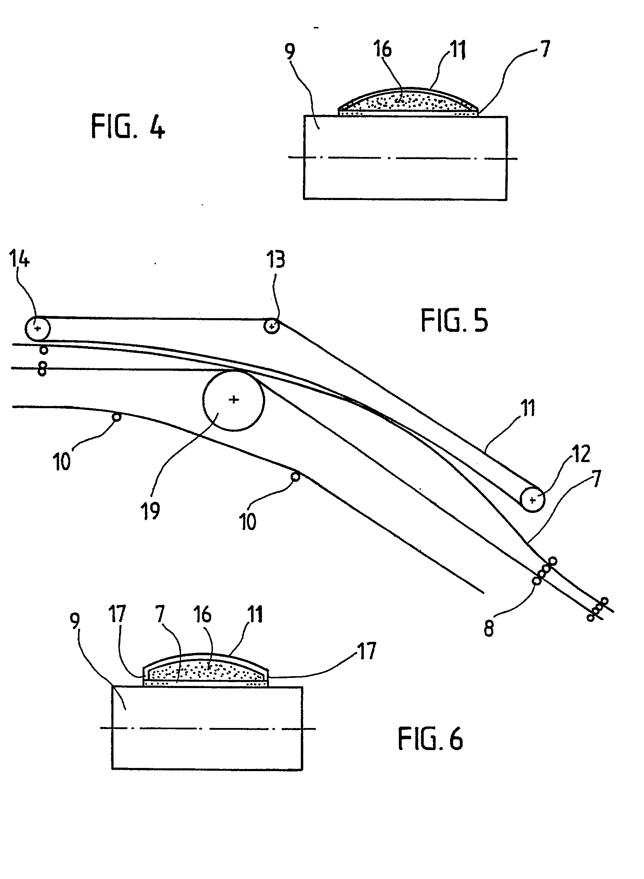

Gemäß der Darstellung in Fig. 2 befindet sich der Fördergurt 7 in einem teilgeöffneten Zustand im Anfangsdrittel der Übergangszone. Das Untertrum des Deckbandes 11 ist unter der Wirkung der Schwerkraft und als Folge der Unterbringung der Zugkräfte aufnehmenden Festigkeitsträger ausschließlich in den Randbereichen etwa V-förmig konvex in den zunehmend sich öffnenden Spalt des ursprünglichen Kreisquerschnittes eingezogen und liegt mit leichter Pressung auf dem Transportgut 16 auf. Es stützt sich linienhaft auf den noch hochgebogenen Seitenkanten des Fördergurtes 7 ab; in seinen diese überragenden Seitenbereichen wird es aber zusätzlich auf schrägstehenden zylindrischen Tragrollen 15 geführt. Die Querschnittszeichnung in Fig. 3 zeigt einen schon weiter fortgeschrittenen Öffnungszustand, wobei eine mit einer änderbaren Kraft P belastete frei mitlaufende Druckrolle 18 das Deckband 11 im Mittenbereich des Untertrums verstärkt auf das Transportgut 16 niederpreßt. In dem in Fig. 4 veranschaulichten Endzustand läuft der Fördergurt 7 breitgestreckt auf die Umlenkrolle 9 auf und wirft das kompakt eingeschlossene Transportgut 16 mit dem Weiterdrehen der Umlenkrolle an einer genau definierten Winkelstellung der Rolle in stets gleichbleibender Richtung ab. Da der Massestrom nicht mehr im freien Fall eine Parabel wechselnder Sehnenlänge beschreibt, sondern an dem schräg nach unten forgesetzten Ast des Deckbandes 11 eine bewegliche Führung findet, läßt sich der Auftreffbereich eng umgrenzt genau lokalisieren.

In Fig. 5 ist der Übergang des Fördergurtes 7 von einer Steilstrecke in einen weiterführenden waagerechten Streckenabschnitt unter Verwendung eines Deckbandes 11 in der erfindungsgemäßen Anordnung dargestellt. Die Umlenktrommel 19 markiert in diesem Falle nicht das Ende der Förderstrecke, sondern nur einen mit einer Formänderung des anfänglich zum Schlauchquerschnitt geschlossenen Fördergurtes 7 verbundenen Richtungswechsel. Für die wesentlichen Vorgänge gilt die vorstehende Beschreibung zu den Fig. 1, 2, 3 und 4 gleichermaßen.

Gemäß der in Fig. 6 dargestellten Variante ist das Deckband 11 mit auf die Seitenkanten aufgesetzten flexiblen Wandelementen 17 versehen, so daß es mit dem breitgestreckten Fördergurt ein größeres Volumen als im flach aufliegenden Zustand einschließt. An der Wirkungsweise der Gesamtanlage ändert sich hierdurch grundsätzlich nichts.

## Patentansprüche

1. Gurt-Förderanlage mit einem aus Gummi oder gummiähnlichen Kunststoffen hergestellten endlosen Fördergurt (7), der auf dem überwiegenden Teil der Förderstrecke durch Überlappen seiner Längsränder zu einem ringsum durch Tragrollen (8) abgestützten Schlauchband geschlossen ist, und der Bereiche aufweist, in denen er offen ausgebreitet über Umlenkrollen (9, 19) geführt ist, dadurch gekennzeichnet, daß im Übergangsbereich des Förder-

dergurtes (7) von der Schlauchform zur offen ausgebreiteten Form das Untertrum eines über mindestens drei Umlenkrollen (12, 13, 14) laufenden Deckbandes (11) in den sich öffnenden Querschnitt des Fördergurtes (7) eintaucht, wobei das Untertrum des Deckbandes (11) mit seiner Mittelzone sich unmittelbar auf das Fördergut (16) auflegt und mit seinen Randzonen sich auf den Längskanten des Fördergurtes (7) abstützt.

2. Förderanlage nach Anspruch 1, gekennzeichnet durch mindestens eine Druckrolle (18), die frei drehbar und senkrecht zur Förderrichtung des Fördergurtes (7) verstellbar zwischen Ober- und Untertrum des Deckbandes (11) gelagert ist, wobei sie an der Oberseite des Untertrums anliegt und dessen Mittelzone gegen das Fördergut (16) drückt.

3. Förderanlage nach den Ansprüchen 1 oder 2, dadurch gekennzeichnet, daß beiderseits des Fördergurtes (7) unter einem Schrägwinkel gegen die Waagerechte ausgerichtete Tragrollensätze (15) zum Abstützen der den Fördergurt seitlich überragenden Randbereiche des Untertrums des Deckbandes (11) angeordnet sind.

4. Förderanlage nach einem der Ansprüche 1 bis 3, dadurch gekennzeichnet, daß das Deckband (11) ausschließlich in seinen Randbereichen mit in Längsrichtung durchlaufenden eingebetteten Festigkeitsträgern versehen ist.

5. Förderanlage nach einem der Ansprüche 1 bis 4, dadurch gekennzeichnet, daß das Deckband (11) auf seiner dem Fördergurt (7) zugekehrten Oberfläche mit an den Randkanten aufgesetzten durchlaufenden biegsamen Wandelementen (17) versehen ist.

6. Förderanlage nach Anspruch 5, dadurch gekennzeichnet, daß das Deckband (11) ausschließlich in den aufgesetzten Wandelementen (17) mit in Längsrichtung durchlaufenden eingebetteten Festigkeitsträgern versehen ist.

7. Förderanlage nach einem der Ansprüche 1 bis 6, dadurch gekennzeichnet, daß das Deckband (11) mit einer der Breite des Fördergurtes (7) im flachebenen Zustand entsprechenden Breite ausgebildet ist.

8. Förderanlage nach einem der Ansprüche 1 bis 7, mit im Bereich einer Abwurfstelle angeordnetem Deckband, dadurch gekennzeichnet, daß das Deckband (11) in Berührung mit dem flach-ebenen Fördergurt (7) über einen begrenzten Bogenwinkel um die Endumlenkrolle (9) des Fördergurtes (7) und dann um eine unterhalb dieser Endumlenkrolle (9) in Abwurfrichtung vorversetzte untere Umlenkrolle (14) geführt ist.

9. Förderanlage nach Anspruch 8, dadurch gekennzeichnet, daß die untere Umlenkrolle (14) des Deckbandes (11) in Radialrichtung in einer zur Abgaberichtung parallelen oder im wesentlichen parallelen Ebene verstellbar (Pfeil I) gelagert ist.

**Claims**

1. Belt conveyor arrangement, having an endless conveyor belt (7) which is formed from rubber or rubber-like plastics materials and is closed to form a tubular belt, which is supported all-round by supporting rollers (8), on the predominant portion of the conveyor path by an overlapping of its longitudinal edges, and which conveyor belt has regions in which it is guided, in an open, spread-out manner, over guide rollers (9, 19), characterised in that, in the transitional region of the conveyor belt (7), from the tubular form to the open, spread-out form, the lower run of a cover belt (11), which travels over at least three guide rollers (12, 13, 14), extends into the opening-up cross-section of the conveyor belt (7), the lower run of the conveyor belt (11) being placed with its central zone directly onto the material to be conveyed (16) and being supported with its edge zones on the longitudinal edges of the conveyor belt (7).

2. Conveyor arrangement according to Claim 1, characterised by at least one pressure roller (18), which is mounted between the upper and lower run of the cover belt (11) so as to be freely rotatable and adjustable at right angles to the direction of conveyance of the conveyor belt (7), the pressure roller abutting against the upper surface of the lower run and pressing the central zone of the lower run towards the conveyed material (16).

3. Conveyor arrangement according to Claim 1 or 2, characterised in that sets of supporting rollers (15), which are aligned at an inclined angle relative to the horizontal, are disposed on both sides of the conveyor belt (7) in order to support the edge regions of the lower run of the cover belt (11) which extend laterally beyond the conveyor belt.

4. Conveyor arrangement according to any of Claims 1 to 3, characterised in that, exclusively in its edge regions, the cover belt (11) is provided with embedded reinforcing members which extend in a longitudinal direction.

5. Conveyor arrangement according to any of Claims 1 to 4, characterised in that, on its surface facing the conveyor belt (7), the cover belt (11) is provided with continuous, flexible wall elements (17) which are mounted at the edges.

6. Conveyor arrangement according to Claim 5, characterised in that, exclusively in the mounted wall elements (17), the cover belt (11) is provided with embedded reinforcing members which extend in a longitudinal direction.

7. Conveyor arrangement according to any of Claims 1 to 6, characterised in that the cover belt (11) is provided with a width which corresponds to the width of the conveyor belt (7) when it is level.

8. Conveyor arrangement according to any of Claims 1 to 7, having a cover belt disposed in the region of a discharge location, characterised in that the cover belt (11), in contact with the level conveyor belt (7), is guided over a defined arcuate angle about the terminal guide roller (9) of the conveyor belt (7) and then about a lower guide roller (14) which is disposed in the discharge direction beneath this terminal guide roller (9).

9. Conveyor arrangement according to Claim 8, characterised in that the lower guide roller (14) of the cover belt (11) is mounted so as to be adjustable (arrow I) in a radial direction in a plane which is parallel or substantially parallel to the delivery direction.

## Revendications

1. Installation transporteuse à courroie, comportant une courroie transporteuse sans fin (7), fabriquée en caoutchouc ou en matières plastiques analogues au caoutchouc, qui est fermée sur la partie principale du trajet de transport par recouvrement de ses bords latéraux sous la forme d'une bande tubulaire souple soutenue annulairement par des rouleaux porteurs (8), et qui comporte des zones dans lesquelles elle est guidée avec élargissement en condition d'ouverture sur des rouleaux de renvoi (9, 19), caractérisée en ce que, dans une zone de transition de la courroie transporteuse (7) de la forme de tuyau souple à la forme étalée élargie en condition d'ouverture, le brin inférieur d'une bande de recouvrement (11), passant sur au moins trois rouleaux de renvoi (12, 13, 14), pénètre dans la section de la courroie transporteuse (7) qui s'ouvre, le brin inférieur de la bande de recouvrement (11) s'appliquant par sa zone centrale directement sur le produit transporté (16), et s'appuyant par ses zones marginales contre les bords longitudinaux de la courroie transporteuse (7).

2. Installation transporteuse selon la revendication 1, caractérisée par au moins un rouleau de pression (18), qui est monté de façon librement tournante et qui est déplaçable, perpendiculairement à la direction de transport de la courroie transporteuse (7) entre le brin supérieur et le brin inférieur de la bande de recouvrement (11), ce rouleau s'appliquant contre le côté supérieur du brin inférieur et exerçant une pression contre le produit transporté (16) par sa zone centrale.

3. Installation transporteuse selon les revendications 1 ou 2, caractérisée en ce qu'il est prévu des deux côtés de la courroie transporteuse (7) des ensembles de rouleaux porteurs (15) orientés en oblique par rapport à l'horizontale et servant à soutenir les zones marginales, dépassant latéralement de la courroie transporteuse, du brin inférieur de la bande de recouvrement (11).

4. Installation transporteuse selon une des revendications 1 à 3, caractérisée en ce que la bande de recouvrement (11) est pourvue, exclusivement dans ses zones marginales, de supports de renforcement noyés dans la bande et orientés dans la direction longitudinale.

5. Installation transporteuse selon les revendications 1 à 4, caractérisé en ce que la bande de recouvrement (11) est pourvue, sur sa surface dirigée vers la courroie de transport (7), d'éléments de paroi flexibles (17), continus et relevés sur les bords latéraux.

6. Installation transporteuse selon la revendication 5, caractérisée en ce que la bande de recouvrement (11) est pourvue, exclusivement dans les éléments de paroi relevés (17), de renforts noyés et continus dans la direction longitudinale.

7. Installation transporteuse selon une des revendications 1 à 6, caractérisée en ce que la bande de recouvrement (11) est pourvue d'une largeur correspondant, dans la condition d'étalement à plat, à la largeur de la courroie transporteuse (7).

8. Installation transporteuse selon une des revendications 1 à 7, comportant und bande de recouvrement disposée dans une zone d'un poste d'éjection, caractérisée en ce que la bande de recouvrement (11) est guidée en contact avec la courroie transporteuse (7) étalée à plat sur un arc limité autour du rouleau extrême de renvoi (9) de la courroie transporteuse (7), et ensuite autour d'un rouleau inférieur de renvoi (14), décalé vers l'avant, dans la direction d'éjection, en dessous de ce rouleau extrême de renvoi (9).

9. Installation transporteuse selon la revendication 8, caractérisée en ce que le rouleau inférieur de renvoi (14) de la bande de recouvrement (11) est monté de façon à pouvoir être décalé (flèche I) selon une direction radiale, dans un plan parallèle ou sensiblement parallèle à la direction de décharge.

FIG. 1

FIG. 2

FIG. 3

FIG. 4

FIG. 5

FIG. 6